# EUROPEAN PATENT APPLICATION

(11) **EP 4 588 947 A1**
(43) Date of publication of application: **23.07.2025**
(21) Application number: 25151410.5
(22) Date of filing: 13.01.2025
(51) Int. Cl.: C08G 18/08, C08F 4/40, C08G 18/22, C08G 18/32, C08G 18/48, C08G 18/73, C08J 5/18, C08F 220/00, C08G 18/28

(54) **POLYMERIC PHOTOINITIATOR, PREPARATION METHOD THEREOF AND PHOTOCURABLE COMPOSITION COMPRISING THE SAME**

(30) Priority: 18.01.2024 EP 24152629
(71) Applicant: Covestro (Taiwan) Ltd, Taipei 11049 (TW); National Central University, Taoyuan City 320317 (TW)
(72) Inventor: WEN, Wen Hsien, 320317 Taoyuan City (TW); KE, Yao Sheng, 320317 Taoyuan City (TW); JANSEN, Johan Franz Gradus Antonius, 6165 AP Geleen (NL); CHEN, Ming-Chou, 320317 Taoyuan City (TW); PAN, Hao-Wei, 320317 Taoyuan City (TW); ZENG, De-You, 320317 Taoyuan City (TW)
(74) Representative: Levpat

(57) **Abstract**

The present invention provides a photoinitiator having a structure according to formula (I) 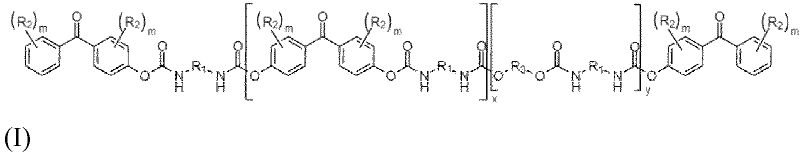 wherein
x:y is from 1:1 to 1: 13;
R₁ is independently a residue of polyisocyanate;
R₂ is independently selected from halogen, C₁₋₂₀ alkyl, or C₁₋₂₀ alkoxy;
R₃ is independently selected from 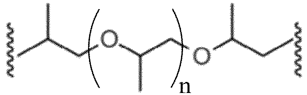 or 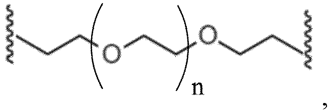 wherein n is an integer from 1 to 12; and
m is independently 0, 1, 2, 3 or 4. The photoinitiator of the present invention has a high conversion rate and low migration.

## Description

### BACKGROUND

### Field of the Disclosure

The present invention relates to a polymeric photoinitiator and a preparation method therefor and a photocurable composition including the same.

### Description of the Related Art

A photocuring reaction is a new curing method developed in industry in the 20^{th} century. Under the light condition, photoinitiators facilitate chemical reactions that covalent bonds between atoms are elongated, weakened, and broken, thereby producing active fragments that initiate monomer polymerization, such that liquid resin is transformed into a solid polymeric material. At present, the photocuring reaction is characterized by "5E": efficient, enabling, economical, energy saving, and environmental friendly.

Photocurable coatings mainly can be applied to materials such as protective films, printing ink, adhesives, and solder masks. Benzophenone (BP) is one of the most widely used photoinitiators due to its excellent curing effect, good solubility, and low price. However, BP has a strong odor, and can easily migrate from printed matter to its surface, posing health hazards if exposed to or even ingested by humans.

One way to overcome the above-mentioned problems is to increase the molecular weight of the photoinitiator to reduce migration. For example, China Invention Patent Publication No. CN100395267C discloses a polymeric benzophenone photoinitiator, which is formed by a polymerization reaction of polyether or polyester polyols, isocyanate, and benzophenone. China Invention Patent Publication No. CN102127173B discloses another polymeric benzophenone photoinitiator, which has an acrylate group, and double bonds in the structure thereof can undergo the polymerization reaction with acrylic monomers, so that it can be polymerized, together with the acrylic monomers, into a reaction system.

However, the reactivity of these photoinitiators is still insufficient. Therefore, in order to achieve a desired hardening rate, a considerable amount of these photoinitiators is required. On the other hand, by excessive use of the photoinitiator, hardened solids will not be formed and their viscosity will be increased, and the migration is prone to rising.

Therefore, there is still a need for a polymeric benzophenone photoinitiator in the industry, which can be added in a high amount or has high reactivity, and also has low migration, to facilitate subsequent industrial applications.

### SUMMARY

One objective of the present invention is to provide a photoinitiator having a structure according to formula (I) 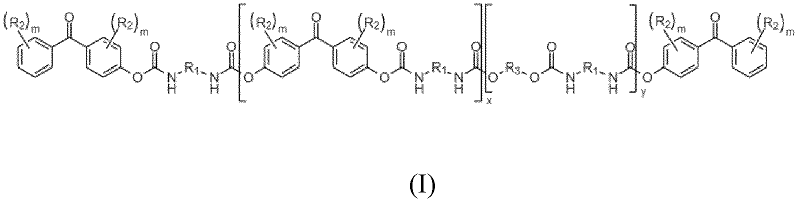 wherein
x:y is from 1:1 to 1: 13;
R₁ is independently a residue of polyisocyanate;
R₂ is independently selected from halogen, C₁₋₂₀ alkyl, or C₁₋₂₀ alkoxy;
R₃ is independently selected from 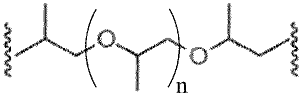 or 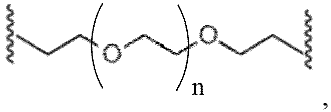 wherein n is an integer from 1 to 12;
   and
m is independently 0, 1, 2, 3 or 4.

Another objective of the present invention is to provide a method for preparing a photoinitiator according to formula (I), wherein the method comprises a condensation reaction of a compound of formula (2) with a compound of formula (1), a compound of formula (3) and a compound of formula (4):

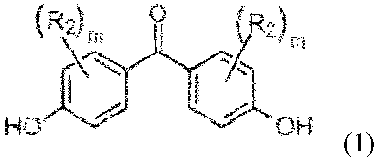

OCN-R₁-NCO (2)

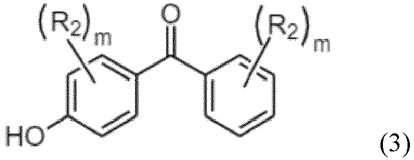

OH-R₃-OH (4)

where
R₁ is independently a residue of polyisocyanate;
R₂ is independently selected from halogen, C₁₋₂₀ alkyl, or C₁₋₂₀ alkoxy;
R₃ is independently selected from 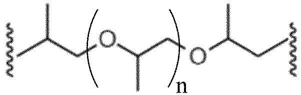 or 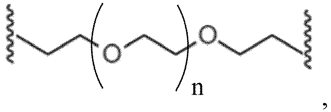 wherein n is an integer from 1 to 12; and
m is independently 0, 1, 2, 3 or 4. Each symbol 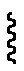 represents a point of attachment.

Another objective of the present invention is to provide a photocurable composition, including an ethylenically unsaturated curable compound and the photoinitiator as described above.

In the present invention, a polycarbamate benzophenone (PCBP) polymeric photoinitiator is synthesized by using the condensation reaction between the compounds of formula (1) to (4), and the PCBP polymeric photoinitiator has low migration. Compared with the reactivity of a benzophenone photoinitiator in the prior art, that of the photoinitiator of the present invention is significantly improved. Furthermore, compared with a method for preparing a photoinitiator using acrylate groups for the polymerization reaction, the preparation method of the present invention has the advantages of easier control, simpler process, faster reaction, and no need for heating, and can prepare the photoinitiator more effectively.

### DETAILED DESCRIPTION

The present disclosure is described with reference to the following embodiments. Aside from the following embodiments, the present disclosure may be performed according to another method without departing from the spirit of the present disclosure.

For ease of understanding of the disclosure of this specification, a plurality of terms are defined as follows. The terminology used herein is for the purpose of describing particular embodiments only and is not intended to be limiting of the invention. The singular forms are intended to include the plural forms as well, unless the context clearly indicates otherwise. It will be further understood that the terms "include," "have" or "comprise" when used in this specification, specify the presence of stated features, numbers, steps, components, or combinations thereof, but do not preclude the presence or addition of one or more other features, numbers, steps, components, or combinations thereof.

All numerical values expressing the contents, proportions, and physical characteristics, etc. used in the specification and claims are to be construed as being modified by the term "about." Herein, the term "about" refers to an acceptable error of a specific value determined by those skilled in the art, depending in part on how the value is measured or determined.

The present invention provides a photoinitiator according to formula (I), 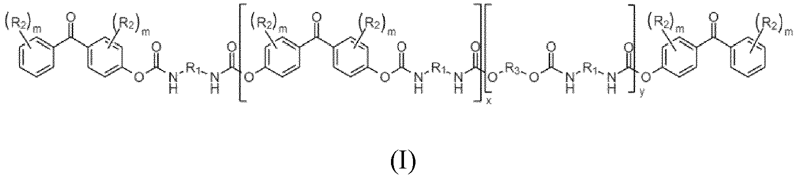 where
x:y is from 1:1 to 1: 13;
R₁ is independently a residue of polyisocyanate, preferably is independently selected from optionally substituted C₁₋₂₀ alkylene or C₆₋₂₀ arylene, and more preferably is independently selected from C₁₋₂₀ alkylene or C₆₋₂₀ arylene that is unsubstituted or substituted with alkoxy, alkenyl, or carboxyl;
R₂ is independently selected from halogen, optionally substituted C₁₋₂₀ alkyl, or optionally substituted C₁₋₂₀ alkoxy; and
R₃ is independently selected from 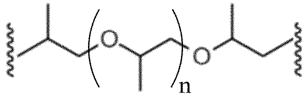 or 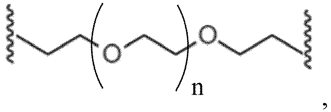 wherein n is an integer from 1 to 12, preferably n is an integer from 1 to 10; and
m is independently 0, 1, 2, 3 or 4, preferably m is 0.

As used herein, the residue of polyisocyanate refers to a structure left after reacted isocyanate group (-N=C=O) is removed from the polyisocyanate.

Generally, the polyisocyanate is a compound with two or more isocyanates in a molecule. The compound may include aromatic, cycloaliphatic, and/or aliphatic polyisocyanates.

Non-limiting examples of suitable aromatic polyisocyanates include: any isomers of toluene diisocyanate (TDI) either in the form of pure isomers or in the form of a mixture of several isomers, naphthalene-1,5-diisocyanate (NDI), naphthalene-1,4-diisocyanate (NDI), 4,4'-diphenylmethane-diisocyanate (MDI), 2,4'-diphenylmethane-diisocyanate (MDI), xylylenediisocyanate (XDI), 2,2-diphenylpropane-4,4'-diisocyanate, p-phenylene diisocyanate, m-phenylene diisocyanate, diphenyl-4,4'-diisocyanate, diphenylsulphone-4,4'-diisocyanate, 1-chlorobenzene-2,4-diisocyanate, 4,4',4"-triisocyanato-triphenyl-methane, 1,3,5-triisocyanato-benzene, 2,4,6-triisocyanato-toluene, furfurylidene diisocyanate, and mixtures thereof.

Non-limiting examples of suitable cycloaliphatic polyisocyanates include 4,4'-dicyclohexylmethane diisocyanate (H₁₂MDI), 3,5,5-trimethyl-3-isocyanatomethyl-1-isocyanato-cyclohexane (isophoronediisocyanate, IPDI), cyclohexane-1,4-diisocyanate, cyclohexane-1,2-diisocyanate, hydrogenated xylylene diisocyanate (H₆XDI), m- or p-tetramethylxylylene diisocyanate (m-TMXDI, p-TMXDI), diisocyanate from dimer acid, and mixtures thereof.

Non-limiting examples of suitable aliphatic isocyanates include 1,5-diisocyanatopentane, hexane-1,6-diisocyanate (HDI), 2,2,4-trimethylhexane-1,6-diisocyanate, 2,4,4-trimethylhexane-1,6-diisocyanate, butane-1,4-diisocyanate and 1,12-dodecane diisocyanate (C12Dl). Particularly preferred for maximum formulation stability is a liquid mixture of 4,4'-diphenylmethane-diisocyanate, 2,4'-diphenylmethane-diisocyanate, and mixtures thereof.

According to an embodiment of the present invention, R₁ is independently selected from optionally substituted C₁₋₂₀ alkylene or C₆₋₂₀ arylene, and more preferably is independently selected from C₁₋₂₀ alkylene or C₆₋₂₀ arylene that is unsubstituted or substituted with alkoxy, alkenyl, or carboxyl, and even more preferably is independently selected from C₁₋₂₀ alkylene.

According to an embodiment of the present invention, R₂ is independently selected from halogen, C₁₋₂₀ alkyl, or C₁₋₂₀ alkoxy; and m is independently 0, 1, 2, 3 or 4.

According to a preferred embodiment of the present invention, m is 0.

The photoinitiator according to the invention preferably has a weight average molecular weight Mw from 1500 to 9000 g/mol, more preferably from 1750 to 7000 g/mol and even more preferably from 2000 to 5000 g/mol, wherein the weight average molecular weight Mw is determined as described further herein.

R₃ is independently selected from 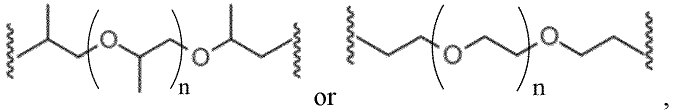 wherein n is an integer from 1 to 12. Preferably, n is an integer from 1 to 10.

In formula (I), x:y is from 1:1 to 1:13. Preferably, x is an integer from 1 to 5 and y is an integer from 1 to 5.

The term "substituted" used herein refers to a group substitution of one or more hydrogen atoms by non-hydrogen or non-carbon atoms. Substituents include, for example, but not limited to: halogen, hydroxyl, alkoxy, -CN, alkenyl, carboxyl, C₆-C₁₄ aryl, heterocyclic and the like.

The term "alkyl" used herein include straight chain and branched alkyl groups having from 1 to 20 carbon atoms or, in some embodiments, from 1 to 12, 1 to 8, 1 to 6, or 1 to 4 carbon atoms. Alkyl groups further include cycloalkyl groups. Examples of straight chain alkyl groups include those with from 1 to 8 carbon atoms such as methyl, ethyl, n-propyl, n-butyl, n-pentyl, n-hexyl, n-heptyl, and n-octyl groups. Examples of branched alkyl groups include, but are not limited to, isopropyl, iso-butyl, sec-butyl, tert-butyl, neopentyl, isopentyl, and 2,2-dimethylpropyl groups. Representative substituted alkyl groups may be substituted one or more times with substituents such as those listed above. For example, where the term haloalkyl is used, the alkyl group is substituted with one or more halogen atoms.

Cycloalkyl groups are cyclic alkyl groups such as, but not limited to, cyclopropyl, cyclobutyl, cyclopentyl, cyclohexyl, cycloheptyl, and cyclooctyl groups.

The alkenyl group includes a group containing at least one C=C bond.

As used herein, "aryl" or "aromatic" groups are cyclic aromatic hydrocarbons that do not contain heteroatoms. Aryl groups include monocyclic, bicyclic and polycyclic ring systems. Thus, aryl groups include, but are not limited to, phenyl, azulenyl, heptalenyl, biphenylenyl, indacenyl, fluorenyl, phenanthrenyl, triphenylenyl, pyrenyl, naphthacenyl, chrysenyl, biphenyl, anthracenyl, indenyl, indanyl, pentalenyl, and naphthyl groups. In some embodiments, aryl groups contain 6-14 carbons, and in others from 6 to 12 or even 6-10 carbon atoms in the ring portions of the groups. The phrase "aryl groups" includes groups containing fused rings, such as fused aromatic-aliphatic ring systems (e.g., indanyl, tetrahydronaphthyl, and the like). Aryl groups may be substituted or unsubstituted

The term "heterocyclic" refers to saturated, partially saturated (such as those named by dihydro-, trihydro-, tetrahydro- and hexahydro- in the prefix) or unsaturated 3- to 14-membered rings, preferably 4- to 10-membered rings, more preferably 5- to 6-membered rings, constituted of carbon atoms and at least one hetero atom selected from N, O or S. Preferably, it has 1 to 4 hetero atoms; more preferably, it has 1 to 3 hetero atoms. The heterocyclic cover ring systems of monocyclic ring, bicyclic ring or tricyclic ring, which include fused rings (for example, a fused ring formed by a heterocyclic together with another heterocyclic or aromatic carbon ring).

The symbol 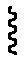 represents a point of attachment.

According to an embodiment of the present invention, in the photoinitiator according to formula (I), R₁ is independently selected from optionally substituted C₁₋₂₀ alkylene or C₆₋₂₀ arylene, more preferably is independently selected from C₁₋₂₀ alkylene or C₆₋₂₀ arylene that is unsubstituted or substituted with alkoxy, alkenyl, or carboxyl, and even more preferably is independently selected from C₁₋₂₀ alkylene; R₂ is independently selected from halogen, C₁₋₂₀ alkyl, or C₁₋₂₀ alkoxy; and m is 0, 1, 2, 3, or 4, and m is preferably 0.

The present invention further provides a method for preparing a photoinitiator according to formula (I), 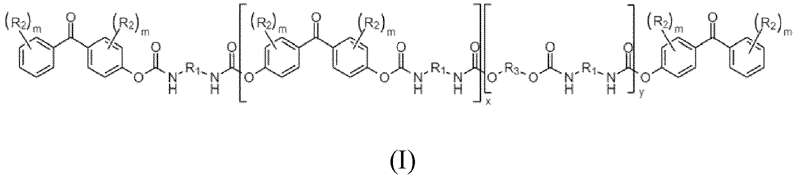 comprising a condensation reaction between a compound of formula (2) with a compound of formula (1), a compound of formula (3) and a compound of formula (4), and optionally a catalyst,

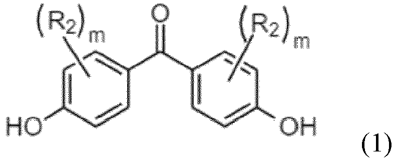

OCN-R₁-NCO (2)

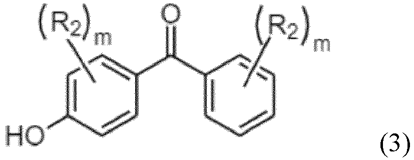

OH-R₃-OH (4)

wherein
R₁ is independently a residue of polyisocyanate, preferably is independently selected from optionally substituted C₁₋₂₀ alkylene or arylene, and more preferably is independently selected from C₁₋₂₀ alkylene or arylene that is unsubstituted or substituted with alkoxy, alkenyl, or carboxyl; and
R₂ is independently selected from halogen, optionally substituted C₁₋₂₀ alkyl, or optionally substituted C₁₋₂₀ alkoxy; and
R₃ is independently selected from 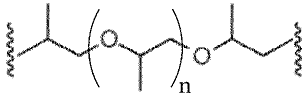 or 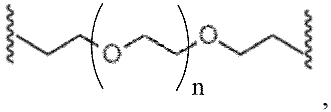 wherein n is an integer from 1 to 12, preferably n is an integer from 1 to 10; and
m is independently 0, 1, 2, 3 or 4, preferably 0.

As used herein, the term "catalyst" refers to standard catalysts for the reaction between isocyanates and hydroxyl groups, as known in the art. Such catalysts include but are not limited to: stannous salts of carboxylic acids, such as stannous octoate, stannous oleate, stannous acetate and stannous laureate; dialkyltin dicarboxylates, such as dibutyltin dilaureate and dibutyltin diacetate; tertiary amines; alkanolamine compounds; 2,3-dimethyl-3,4,5,6-tetrahydropyrimidine; tetraalkylammonium hydroxides; alkali metal hydroxides; alkali metal alcoholates; tin alkoxides, such as dibutyltin dimethoxide, dibutyltin diphenoxide and dibutyltin diisoproxide; tin oxides, such as dibutyltin oxide and dioctyltin oxide; the reaction products of dibutyltin oxides and phthalic acid esters; tin mercaptides; alkyl titanates; organoaluminum compounds such as aluminum trisacetylacetonate, aluminum trisethylacetoacetate and diisopropoxyaluminum ethylacetoacetate; chelate compounds such as zirconium tetraacetylacetonate and titanium tetraacetylacetonate; organosilicon titanium compounds; bismuth tris-2-ethylhexanoate, bismuth neodecanoate complexes and complexes of bismuth with hydroxypropyl ethylene diamine and hydroxylethyl ethylene diamine; acid compounds such as phosphoric acid and p-toluenesulfonic acid; triphenylborane; triphenylphosphine; 1 ,8-diazabicycloundec-7-ene (DBU); 1,5-diazabicyclo[4.3.0]non-5-ene; 1,4-diazabicyclo[2.2.2]octane; 4-dimethylaminopyridine; 1,5,7-triazabicyclo[4.4.0]dec-5-ene; 7-methyl-1,5,7-triazabicyclo[4.4.0]dec-5-ene; 1,8-bis(tetramethylguanidino)naphthalene; and, 2-tert-butyl-1,1,3,3-tetramethylguanidine. Depending on the nature of the isocyanate, the amount of catalyst employed is typically in the range from 0.005 to 0.05 equivalents, for example 0.01 equivalent. According to an embodiment of the present invention, the catalyst is bismuth neodecanoate.

According to an embodiment of the present invention, the above-mentioned condensation reaction can be carried out in a solvent. The solvent includes but is not limited to: alkyl acetate solvents such as ethyl acetate, n-propyl acetate, butyl acetate, n-butyl acetate, propylene glycol monomethyl ether acetate and methoxypropyl acetate (MPA); alkyl propionate solvents such as n-butyl propionate and n-pentyl propionate; dibasic esters such as dimethyl succinate, dimethyl glutarate, dimethyl adipate; (di)alkyl carbonate solvents such as ethylene carbonate, propylene carbonate (PC), dimethyl carbonate (DMC), ethyl methyl carbonate (EMC) and diethyl carbonate (DEC); ethers such as tetrahydrofuran, dioxane and dimethoxyethane; glycol ether solvents such as ethylene glycol dimethyl ether, ethylene glycol diethyl ether, ethylene glycol dibutyl ether, ethylene glycol diphenyl ether, diethylene glycol, diethylene glycol-monomethyl ether, diethylene glycol-monoethyl ether, diethylene glycol-mono-n-butyl ether, diethylene glycol dimethyl ether, diethylene glycol diethyl ether, diethylene glycoldi-n-butylyl ether, propylene glycol butyl ether, propylene glycol phenyl ether, dipropylene glycol, dipropylene glycol monomethyl ether, dipropylene glycol dimethyl ether and dipropylene glycoldi-n-butyl ether; amide solvents dimethyl acetamide and N-methylpyrrolidone; ketone solvents such as acetone, diisobutyl ketone, isobutyl heptyl ketone, isophorone, methyl ethyl ketone, methyl n-amyl ketone and methyl isobutyl ketone; toluene; xylene; diphenylmethane; diisopropylnaphthalene; and chlorohydrocarbon solvents such as 4-chlorotrifluoromethylbenzene and 3,4-bis(dichloro)trifluoromethylbenzene. According to a specific embodiment of the present invention, the solvent is tetrahydrofuran.

According to an embodiment of the present invention, in the method for preparing the photoinitiator, based on the total amount of the polyisocyanate (compound of formula (2)) being 1 mol eq., the amount of the compound of formula (1) may be in the range of about 0.04 mol eq. to about 0.5 mol eq. (e.g., about 0.33 mol eq.); the amount of the compound of formula (3) may be in the range of about 0.02 mol eq. to about 0.45 mol eq. (e.g., about 0.16 mol eq.); and the amount of the compound of formula (4) may be in the range of about 0.1 mol eq. to about 0.8 mol eq. (e.g., about 0.5 mol eq.), whereby the molar equivalents are based on the reactive groups, i.e., isocyanate and hydroxy groups.

According to an embodiment of the present invention, the photoinitiator (PCBP) of formula (IIIa) below can be prepared by the steps shown in the following exemplary reaction scheme:

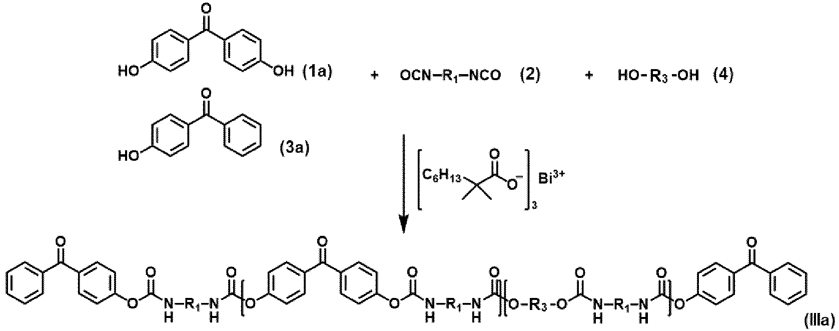

The process may be exemplified as below: 0.05 eq. of 4-hydroxybenzophenone (3a), 1.2 eq. of polyisocyanate (2), 0.6 eq. of polyol (4), and 25 eq. of solvent (e.g., tetrahydrofuran) are added into a reaction vessel. 0.013 eq. of bismuth neodecanoate is added into the reaction vessel and the reaction is carried out in dark at room temperature and atmospheric pressure for 5 min. Then, 0.55 eq. of 4,4'-dihydroxybenzophenone (1a) is added and the reaction is carried out at room temperature and atmospheric pressure for 20 min. After removing the solvent from a reaction mixture, the polymeric photoinitiator (IIIa, PCBP) is obtained.

In the above reaction, 4,4'-dihydroxybenzophenone undergoes a condensation reaction with the polyisocyanate via bismuth neodecanoate as the catalyst, and its reaction mechanism is shown as follows:

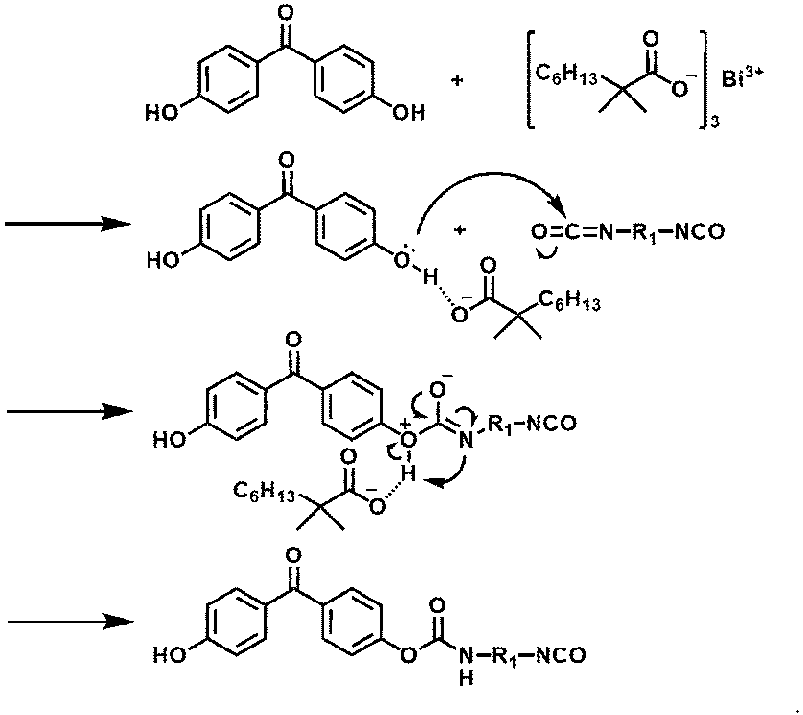

Under the short-wavelength light condition (200 nm to 400 nm), the polymeric photoinitiator (e.g., PCBP) can cause a photopolymerization reaction of UV curable resins (e.g., ethylenically unsaturated curable compounds) commonly used in industry to form cured coatings. These coatings can be subsequently applied in industry: for example, as fiber coatings, inks, varnishes or floor coatings. In a low-migration test conducted by using a 500 MHz nuclear magnetic resonance (NMR) instrument, the inventor of the present invention surprisingly found that the polymeric photoinitiator PCBP according to the present invention has excellent low migration, such that the possibility of human health hazards caused by the photoinitiator in the coating can be effectively reduced in industrial application of the photoinitiator especially in indirect food contact applications.

The present invention further provides a photocurable composition, including an ethylenically unsaturated curable compound and the photoinitiator as described above, wherein the photoinitiator is preferably present in the photocurable composition in an amount from 0.1 to 10 wt.%, based on the total amount of the photocurable composition.

As used herein, the term "ethylenically unsaturated compound" means a compound that comprises a polymerizable carbon-carbon double bond. A polymerizable carbon-carbon double bond is a carbon-carbon double bond that can react with another carbon-carbon double bond in a polymerization reaction. A polymerizable carbon-carbon double bond is generally comprised in a group selected from acrylate (including cyanoacrylate), methacrylate, acrylamide, methacrylamide, styrene, maleate, fumarate, itaconate, allyl, propenyl, vinyl and combinations thereof.

In one embodiment, the ethylenically unsaturated compound may be selected from a (meth)acrylate-functionalized monomer, a (meth)acrylate-functionalized oligomer, an amine-modified acrylate and mixtures thereof. As used herein, the term "(meth)acrylate-functionalized monomer" means a monomer comprising a (meth)acrylate group, in particular an acrylate group. The term "(meth)acrylate-functionalized oligomer" means an oligomer comprising a (meth)acrylate group, in particular an acrylate group. The term "(meth)acrylate group" encompasses acrylate groups (-O-CO-CH=CH₂) and methacrylate groups (-O-CO-C(CH₃)=CH₂).

Preferably, the photocurable composition comprises an oligomer and a reactive diluent. The oligomer is preferably an UV curable oligomer preferably selected from urethane (meth)acrylates, polyether urethane (meth)acrylates, polyester urethane (meth)acrylates, epoxy (meth)acrylates polyether acrylates and polyester (meth)acrylates.

For viscosity reasons it is in general beneficial that reactive diluents are used in the photocurable composition. With reactive diluent is meant a compound being able to reduce the viscosity of the formulation while being able to free radically copolymerize. As reactive diluent various acrylic, methacrylic or vinyl functional monomers can be used. Suitable examples are for instance diacrylates or dimethacrylates of diols or of polyetherdiols, such as propoxylated neopentyl glycol diacrylate, 1,6-hexanediol diacrylate, dipropylene glycol diacrylate (DPGDA), tripropylene glycol diacrylate (TPGDA), diethylene glycol diacrylate, triethylene glycol diacrylate, triethylene glycol dimethacrylate, neopentylglycol diacrylate, 1,4-butanediol diacrylate (e.g, SR213), alkoxylated aliphatic diacrylate (e.g. SR9209A), alkoxylated hexanediol diacrylate (e.g, SR561, SR562, SR563, SR564 from Sartomer Co., Inc), polyethylene glycol (200) diacrylate (SR259), polyether glycol-200-diacrylate, PEG300-diacrylate, polypropylene glycol diacrylate, ethoxylated (3) bisphenol-A-diacrylate, BDDA butanediol diacrylate, BDDMA butane diol dimethacrylate or higher functional acrylates such as trimethylolpropane triacrylate (TMPTA), ethoxylated trimethylolpropane triacrylate, TMP3EOTA ethoxylated (3) trimethylolpropane triacrylate, TMP6EOTA ethoxylated (6) trimethylolpropane triacrylate, propoxylated trimethylolpropane triacrylate, pentaerythritol triacrylate, pentaerythritol(4)-propoxylated triacrylate, pentaerythritol tetraacrylate, ethoxylated or propoxylated neopentylglycol, propoxylate (4) glycerol triacrylate, tri-functional monomers, such as Laromer types from BASF or Ebecryl 2047 or Ebecryl 12 from Allnex, ditrimethylolpropane tetraacrylate, dipentaerythritol-pentaacrylate (Di-PEPA), dipentaerythritol hexaacrylate (DPHA). Examples of vinyl compounds are compounds like butanediol divinyl ether or as mono functional compound N-vinyl caprolactam. Although mono functional (meth)acrylates like for example lauryl (meth)acrylate, phenoxyethyl (meth)acrylate can be used as well, it is preferred for low migratability to employ reactive diluents with at least two free radical curable ethylenically unsaturated groups. Obviously mixtures can be used as well. The reactive diluent is preferably selected from the group consisting of mono-, di-, tri-, tetra-, penta- and hexa-(meth)acrylates with a molecular weight lower than 800 g/mol and any combination of at least two thereof. The photocurable composition of the invention may comprise from 10 to 80 wt.%, in particular from 15 to 75 wt.%, more particularly from 20 to 70 wt.% (meth)acrylate-functionalized oligomer, relative to the entire weight of the photocurable composition. The one or more reactive diluents having one or more, preferably two or more, free radical curable ethylenically unsaturated groups may be present in the photocurable composition in an amount of at least 1 wt.%, or at least 5 wt.%, or at least 10 wt.%, and in an amount of at most 85 wt.%, or at most 80 wt.%, or at most 75 wt.%, or at most 70 wt.%, relative to the entire weight of the photocurable composition.

According to one embodiment of the present invention, the photocurable composition of the present invention may further include an amine synergist. Amine synergists may be introduced in the curable composition of the present invention in order to act synergistically with the photoinitiator and/or to reduce oxygen inhibition. Amine synergists are typically tertiary amines. When used in conjunction with the photoinitiator, the tertiary amine provides an active hydrogen donor site for the excited triple state of the photoinitiator, thus producing a reactive alkyl-amino radical which can subsequently initiate polymerization. Tertiary amines are also able to convert unreactive peroxy species, formed by reaction between oxygen and free radicals, to reactive alkyl-amino radicals, thus reducing the effects of oxygen on curing.

The reaction mechanism of benzophenone and the amine synergist to produce radicals at 200 nm to 400 nm can be shown in the following scheme:

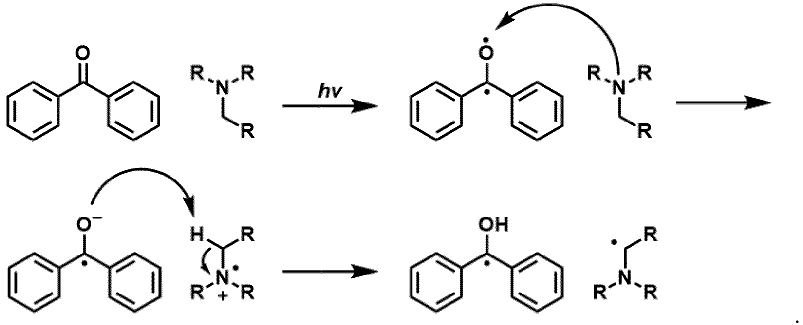

Examples of suitable amine synergists include low-molecular weight tertiary amines such as triethanol amine and N-methyldiethanol amine (MDEA). Other types of amine synergists are aminobenzoates. Examples of aminobenzoates include ethyl 4-(dimethylamino)benzoate (EDMAB), pentyl 4-(dimethylamino)benzoate, 2-ethylhexyl 4-(dimethylamino)benzoate and 2-butoxyethyl 4- (dimethylamino)benzoate (BEDB). Next to these amine synergists, also acrylated amine synergists like AgiSyn^{™} 002, AgiSyn^{™} 003 and/or AgiSyn^{™} 008 can be suitably used. Next to these amine synergists, oligomeric amine synergists like AgiSyn^{™} 701 and/or AgiSyn^{™} 703 can be employed. An example of an oligomeric dimethylaminobenzoate is Omnipol ASA.

According to an embodiment of the present invention, based on the total amount of the ethylenically unsaturated curable compound in the photocurable composition being 1 eq., the amount of the photoinitiator may be in the range of about 0.01 eq. to about 0.1 eq. (e.g., about 0.05 eq.); and the amount of the ammonia synergist may be in the range of about 0.03 eq. to about 0.3 eq. (e.g., about 0.15 eq.).

The examples disclosed herein are for illustrating the embodiments of the present invention and explaining the technical features of the present invention, rather than limiting the scope of protection of the present invention. It would be obvious to persons of ordinary skill in the art that various other changes and modifications can be made without departing from the concept of the present invention.

### Example 1 PCBP-TPG Preparation

0.086g (0.4 mmol) of 4,4'-dihydroxybenzophenone,0.936g (4.5 mmol)-of tripropylene glycol (TPG), 1.16g (7.5 mmol) of 1,5-diisocyanatopentane, and 3 g of tetrahydrofuran as the solvent were weighed and added into a 20 ml reaction flask. 0.015 g (0.02 mmol) of bismuth neodecanoate was weighed and added into the reaction flask, and the reaction was carried out in dark at room temperature and atmospheric pressure for 5 min. Then, 0.884g (4.5 mmol) of 4-hydroxybenzophenone was added and the reaction was carried out at room temperature and atmospheric pressure for 20 min. After removing the solvent from the reaction mixture, the polymeric photoinitiator PCBP-TPG was obtained with an M_{w} of 2.5 kg/mol. The chemical formula of the polymeric photoinitiator PCBP-TPG is as follows:

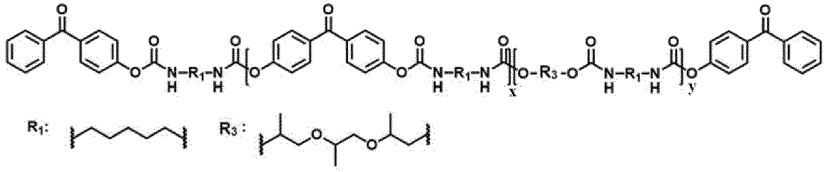

### Comparative Example 1 Preparation of PCBP-TPG analogue with HEA as endcap instead of hydroxybenzophenone

0.086g (0.4 mmol) of 4,4'-dihydroxybenzophenone, 0.936g (4.9 mmol) of tripropylene glycol (TPG), 1.16g 7.5 mmol of 1,5- diisocyanatopentane, and 3 g of tetrahydrofuran as the solvent were weighed and added into a 20 ml reaction flask. 0.015 g (0.02 mmol) of bismuth neodecanoate was weighed and added into the reaction flask, and the reaction was carried out in dark at room temperature and atmospheric pressure for 5 min. Then, 0.518g (4.5 mmol) of hydroxyethyl acrylate was added and the reaction was carried out at room temperature and atmospheric pressure for 20 min. After removing the solvent from the reaction mixture, the polymeric photoinitiator COMP 1 was obtained with an M_{w} of 2.8 kg/mol.

### Comparative Example 2 Preparation of PCBP-TPG analogue with no polyol in oligomeric photoinitiator

1.128g (5.3 mmol) of 4,4'-dihydroxybenzophenone, 1.16 g (7.5 mmol) of 1,5-diisocyanatopentane, and 3 g of tetrahydrofuran as the solvent were weighed and added into a 20 ml reaction flask. 0.015 g (0.02 mmol) of bismuth neodecanoate was weighed and added into the reaction flask, and the reaction was carried out in dark at room temperature and atmospheric pressure for 5 min. Then, 0.884g (4.5 mmol) of 4-hydroxybenzophenone was added and the reaction was carried out at room temperature and atmospheric pressure for 20 min. After removing the solvent from the reaction mixture, the polymeric photoinitiator COMP 2 was obtained. This solid resin was insoluble in acrylate reactive diluents nor in THF.

### Comparative Example 3 Preparation of PCBP-TPG analogue with no benzophenone diol in oligomer

1.012g (5.3 mmol) of tripropylene glycol (TPG), 1.16g (7.5 mmol) of 1,5-diisocyanatopentane, and 3 g of tetrahydrofuran as the solvent were weighed and added into a 20 ml reaction flask. 0.015 g (0.02 mmol) of bismuth neodecanoate was weighed and added into the reaction flask, and the reaction was carried out in dark at room temperature and atmospheric pressure for 5 min. Then, 0.884g (4.5 mmol) of 4-hydroxybenzophenone was added and the reaction was carried out at room temperature and atmospheric pressure for 20 min. After removing the solvent from the reaction mixture, the polymeric photoinitiator COMP 3 was obtained with an M_{w} of 2.4 kg/mol.

### Comparative Example 4 Preparation of PCBP-TPG analogue with a too high molecular weight polyol

0.035g (0.16 mmol) of 4,4'-dihydroxybenzophenone, 1.947g (1.9 mmol) of polypropylene glycol having a molecular weight of 1000 (PPG-1000), 0.465g (3.0 mmol) of 1,5-diisocyanatopentane, and 3 g of tetrahydrofuran as the solvent were weighed and added into a 20 ml reaction flask. 0.015 g (0.02 mmol) of bismuth neodecanoate was weighed and added into the reaction flask, and the reaction was carried out in dark at room temperature and atmospheric pressure for 5 min. Then, 0.354g (1.8 mmol) of 4-hydroxybenzophenone was added and the reaction was carried out at room temperature and atmospheric pressure for 20 min. After removing the solvent from the reaction mixture, the polymeric photoinitiator COMP 4 was obtained with an Mw of 9.8 kg/mol.

### Example 2 PCBP-TEG Preparation

0.086g (0.4 mmol) of 4,4'-dihydroxybenzophenone, 0.73g (4.9 mmol) of triethylene glycol (TEG), 1.16g (7.5 mmol) of 1,5-diisocyanatopentane, and 3 g (41.6 mmol) of tetrahydrofuran as the solvent were weighed and added into a 20 ml reaction flask. 0.015 g (0.02 mmol) of bismuth neodecanoate was weighed and added into the reaction flask, and the reaction was carried out in dark at room temperature and atmospheric pressure for 5 min. Then, 0.884g (4.5 mmol) of 4-hydroxybenzophenone was added and the reaction was carried out at room temperature and atmospheric pressure for 20 min. After removing the solvent from a reaction mixture, the polymeric photoinitiator PCBP-TEG was obtained with an Mw of 2.5 kg/mol.

The chemical formula of polymeric photoinitiator PCBP-TEG is as follows:

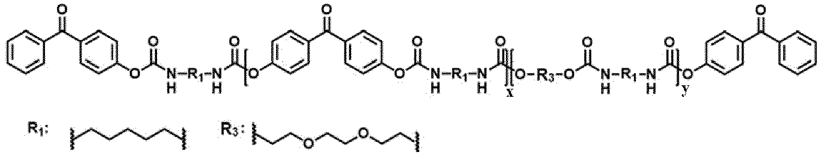

### Example 3 PCBP-PEG Preparation

0.347g (1.6 mmol) of 4,4'-dihydroxybenzophenone, 1.46g (4.9 mmol) of polyethylene glycol having a molecular weight of 300 (PEG-300), 1.25g (8.1 mmol) of 1,5-diisocyanatopentane, and 3 g of tetrahydrofuran as the solvent were weighed and added into a 20 ml reaction flask. 0.015 g (0.02 mmol) of bismuth neodecanoate was weighed and added into the reaction flask, and the reaction was carried out in dark at room temperature and atmospheric pressure for 5 min. Then, 0.643g (3.2 mmol) of 4-hydroxybenzophenone was added and the reaction was carried out at room temperature and atmospheric pressure for 20 min. After removing the solvent from a reaction mixture, the polymeric photoinitiator PCBP-PEG was obtained.

Structural identification was performed by using 500 MHz nuclear magnetic resonance (NMR), from which it can be ascertained that the aforementioned polymeric photoinitiators PCBP-TPG, PCBP-TEG, PCBP-PEG and the comparative photoinitiators COMP 1-4 have been successfully prepared, although the solubility of COMP 2 in CDCl3 was barely sufficient for a 1H-NMR.

The molecular weight M_{w} was measured by gel permeation chromatography (GPC). A chromatographic column of Shodex K-802 was used. The measurements were performed at a flow rate of 1.0 ml/min,

Generally, if the molecular weight is too high, it may cause the problem of insufficient solubility; and if it is too small, the migration cannot be reduced. The polymeric photoinitiator prepared according to the present invention has an average molecular weight of about 2.5 kg·mol⁻¹ and has a good solubility and low migration.

### Synthesis of urethane acrylate

Synthesis of polyether urethane acrylate HEA-TDI-PPG4000-TDI-HEA First, the reactor was purged with dry lean air. Then, first 1.28 parts BHT, then the applicable isocyanate (e.g., 86.62 parts of TDI), followed by 0.08 parts of acrylic acid were charged into a reactor (equipped with a stirrer, air inlet, dropping funnel, and condenser). After charging, the reactor was heated to 45 °C. Then half of the specified amount catalyst (Coscat 83 0.08g) followed by the hydroxy functional acrylate (e.g., HEA, 95.42 parts) were charged into the reactor whilst stirring. After waiting one (1) hour for the reaction to commence, the temperature was then raised to 60°C. At 60 °C the polyol (e.g., PPG4000, 2200 parts) and the second part of the catalyst (e.g., 0.07g) were added after which the reaction temperature was raised to 85°C, then further maintained for two (2) additional hours. After these two (2) additional hours of reaction time, the quantity of isocyanate (NCO) content was measured by a potentiometric titrator to ensure it was lower than 0.1% relative to the entire weight of the composition. If the isocyanate content was not lower than this value, the mixture was placed back in the reaction chamber in 15-minute additional increments (again at 85 °C) and checked again, with this step repeated until the isocyanate content fell to within the desired range. Finally, the resulting synthesized oligomer was cooled slowly and discharged for use in the RT-DMA experiments described herein.

### Determination of reactivity using RT-DMA: Maximum Modulus (G') and T30%, modulus max values

For RT-DMA, formulations were prepared using 70 parts of the urethane acrylate prepared as described above (HEA-TDI-PPG4000-TDI-HEA), 30 parts of 2-phenoxyethyl Acrylate, 2 parts of polymeric photoinitiator prepared as described above and 2 parts of ethyl 4-N,N- dimethylamino benzoate (EDMAB). These formulations were analyzed on a TA instruments Rheometer (HR20) equipped with UV curing accessories (320-500 nm, OmniCure^{®} Series 2000). The UV output intensities were calibrated at the sample position using an external radiometer. For the light guide accessory, the intensity (25 mW/cm2) was applied and recorded as total intensity without any filter. Thickness of the sample was 0.25 mm and a single frequency oscillatory measurement was carried out under a control strain of 1% at 5 Hz. Dynamic time sweep experiments were used to monitor the curing process. Illumination started after 60 sec of measuring. Reported herein is the time to reach 30% of the maximum modulus after start of illumination as measure of cure speed.

**Table 1: Curing speed by RT-DMA**

| | Example 1 | COMP 1 | COMP 2 | COMP 3 | COMP 4 |
|---|---|---|---|---|---|
| Curing speed (T30% to G'*ₘₐₓ*, second | 24 | 66 | Not dissolved | 27 | 31 |

### Example 4 Synthesis of Thin Film Polymer

1 eq. of each of monomers tripropylene glycol diacrylate (TPGDA), 2-hydroxyethyl acrylate (HEA), lauryl acrylate (LA), and 2-(2-Ethoxyethoxy)ethyl acrylate underwent a photopolymerization reaction within 5 seconds with 0.05 eq. of a photoinitiator of the aforementioned PCBP series and 0.15 eq. of N-methyldiethanolamine (MDEA) as an amine synergist under the short-wavelength light condition (365 nm). Then, thin film polymers of these monomers can be obtained.

The monomer conversion rate was measured by using Fourier transform infrared spectroscopy (FTIR). The conversion rate was determined as follows: tripropylene glycol diacrylate was taken as the monomer for testing, and the Fourier transform infrared spectroscopy of tripropylene glycol diacrylate before and after curing were obtained. The conversion rate could be calculated from the ratio of carbonyl to propenyl. After the measurement, the conversion rates of polymeric photoinitiators PCBP-TPG and PCBP-TEG were 96.6% and 99.5%, respectively.

### Example 5 Migration Test

The obtained resin of tripropylene glycol diacrylate was used as the resin to be tested. The cured resin film was immersed in acetonitrile (I) and stirred at room temperature for 4 h. After the sample was filtered, its filtrate was taken, and mesitylene was added to serve as an internal standard. The migration can be calculated from the integral ratio of mesitylene to photoinitiator according to the data of the nuclear magnetic resonance instrument. After the calculation, it can be obtained that the migration of the polymeric photoinitiator PCBP-TPG and the migration of the polymeric photoinitiator PCBP-TEG were 7% and 4.7%, respectively, and the migration of a conventional benzophenone photoinitiator was 87%.

From the above data, it can be seen that the photoinitiator of the present invention has excellent effects of both high conversion rate and low migration.

## Claims

1. A photoinitiator having a structure according to formula (I) 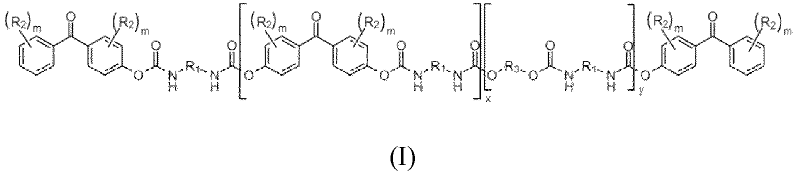 wherein
x:y is from 1:1 to 1: 13;
R₁ is independently a residue of polyisocyanate;
R₂ is independently selected from halogen, C₁₋₂₀ alkyl, or C₁₋₂₀ alkoxy;
R₃ is independently selected from 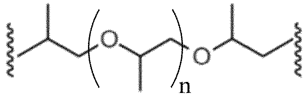
or 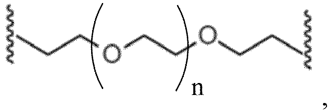 wherein n is an integer from 1 to 12; and
m is independently 0, 1, 2, 3 or 4.

2. The photoinitiator according to claim 1, wherein the photoinitiator has a weight average molecular weight M_{w} from 1500 to 9000 g/mol, preferably from 1750 to 7000 g/mol and more preferably from 2000 to 5000 g/mol, wherein the weight average molecular weight M_{w} is determined as described in the description.

3. The photoinitiator according to claim 1 or 2, wherein m is 0.

4. The photoinitiator according to any of claims 1 to 3, wherein n is an integer from 1 to 10.

5. The photoinitiator according to any of claims 1 to 4, wherein x is an integer from 1 to 5 and y is an integer from 1 to 5.

6. The photoinitiator according to any of claims 1 to 5, wherein R₁ is independently selected from C₁₋₂₀ alkylene or C₆₋₂₀ arylene that is optionally substituted with alkoxy, alkenyl, or carboxyl.

7. The photoinitiator according to any of claims 1 to 5, wherein R₁ is independently selected from C₁₋₂₀ alkylene.

8. A photocurable composition comprising an ethylenically unsaturated curable compound and the photoinitiator according to any one of claims 1 to 7, wherein the photoinitiator is present in the photocurable composition in an amount from 0.1 to 10 wt.%, based on the total amount of the photocurable composition.

9. The photocurable composition according to claim 8, wherein the photocurable composition comprises a (meth)acrylate functionalized oligomer and a (meth)acrylate functionalized monomer.

10. The photocurable composition according to claim 9, wherein the photocurable composition comprises the (meth)acrylate functionalized oligomer in an amount of from 10 to 80 wt.% and the (meth)acrylate functionalized monomer in an amount of from 10 to 85 wt.%.

11. The photocurable composition according to any of claims 8 to 10, further comprising an amine synergist.

12. The photocurable composition according to claim 11, wherein the amine synergist is an acrylated amine synergist or an oligomeric amine synergist.
